# EUROPEAN PATENT SPECIFICATION

(11) **EP 1 790 676 B1**
(45) Date of publication and mention of the grant of the patent: **24.03.2010**
(21) Application number: 05775194.3
(22) Date of filing: 26.08.2005
(51) Int. Cl.: C08G 63/06, C08L 101/16

(54) **GLUCAN DERIVATIVES AND PROCESS FOR PRODUCTION THEREOF**
GLUCANDERIVATE UND HERSTELLUNGSVERFAHREN DAFÜR
DERIVES DE GLUCANE ET PROCESSUS DE PRODUCTION CORRESPONDANT

(30) Priority: 27.08.2004 JP 2004248017
(43) Date of publication of application: 30.05.2007
(73) Proprietor: Daicel Chemical Industries, Ltd., Kita-ku, Osaka-shi Osaka 530-0001 (JP)
(72) Inventor: NAMIKOSHI, Hajime DAICEL CHEMICAL INDUSTRIES LTD, Himeji-shi, Hyogo 6711283 (JP); KATAYAMA, Hiroshi DAICEL CHEMICAL INDUSTRIES LTD, Himeji-shi, Hyogo 6711283 (JP); UMEMOTO, Koichi DAICEL CHEMICAL INDUSTRIES LTD, Himeji-shi, Hyogo 6711283 (JP); SUZUKI, Shinsuke DAICEL CHEMICAL INDUSTRIES LTD, Himeji-shi, Hyogo 6711283 (JP)
(74) Representative: Grünecker, Kinkeldey, Stockmair & Schwanhäusser Anwaltssozietät
(86) International application number: PCT/JP2005/015580
(87) International publication number: WO 2006/022390

(56) References cited:
- JP-A- 4 275 301
- JP-A- 6 287 279
- JP-A- 2001 019 702
- JP-A- 2003 238 669
- H. HATAKEYAMA, T. YOSHIDA, T. HATAKEYAMA: "The Effect of Side Chain Association on Thermal and Viscoelastic Properties Cellulose Acetate based Polycaprolactones" JOURNAL OF THERMAL ANALYSIS AND CALORIMETRY, vol. 59, 2000, pages 157-168, XP002497231

## Description

### TECHNICAL FIELD

The present invention relates to a glucan derivative (e.g., a cellulose acylate derivative) available for a thermoplastic resin, and a production process thereof, as well as a film comprising the glucan derivative.

### BACKGROUND ART

A glucan containing glucose unit, such as a cellulose, a starch (or amylose) or a dextran, has no thermoplasticity, and cannot be used as a plastic (a thermoplastic resin). Therefore, such a glucan (in particular, a cellulose) has been utilized as a thermoplastic resin by being acylated (e.g., acetylated).

In these glucans, in particular, a cellulose is acylated to give a cellulose acylate (particularly, a cellulose acetate), which is used for various applications. For example, a cellulose acetate having an average degree of substitution of 2.4 to 2.5 (a cellulose diacetate) has been used for thermoforming with a plasticizer from the viewpoint of thermoplasticity. However, since such a cellulose diacetate has a large number of hydroxyl groups, there are some problems such as low dimensional stability due to high hygroscopicity. A cellulose triacetate (having an average degree of substitution of 2.8 to 2.9) having a small amount of a hydroxyl group can improve in hygroscopicity to some degree. However, the cellulose triacetate is poor in thermoformability, and a limited solvent such as methylene chloride is used for shaping the cellulose triacetate into a film, a fiber, or others.

In particular, the cellulose triacetate has been utilized as a supporter (or a base material) of a photosensitive photographic material, a polarizer protective film of liquid crystal displays (LCDs), a retarder film, a color filter, and others due to an excellent optical isotropy thereof. That is, the cellulose triacetate has a character that its birefringence is extremely small due to an acetyl group arranged to a direction almost perpendicularly intersecting a main chain thereof even when the cellulose triacetate is oriented. In other words, since the acetyl group is directed to a direction perpendicularly intersecting to the main chain direction, birefringence hardly occurs even in the case where the main chain is allowed to be oriented. As a result, a low retardation in plane film is easy to obtain. This is the prime reason why a cellulose triacetate is utilized for a polarizer protective film.

Although the cellulose triacetate shows a glass transition temperature Tg of 120°C, a melting temperature Tm thereof is unclear and thermal decomposition occurs before melting when the cellulose triacetate is heated. As mentioned above, the cellulose triacetate film is not adequate to thermoforming and cannot be obtained by melt casting [Cellulose Commun Vol.5, No.2 (1998) (Nonpatent Document 1)]. In addition, it is almost difficult to biaxially draw the film by melt casting.

A conventional retarder film having an optical anisotropy (e.g., a film made from a polycarbonate, a polysulfone, a polyamide or others) has a character that the phase difference becomes smaller as wavelength is longer, and it is difficult to impart an ideal phase difference property to all wavelengths of the visible radiation. Therefore, the necessary property for use in a broad band is realized by laminating a plurality of retarder films. In order to obtain the above-mentioned property by a single retarder film, it is preferred that the retardation (Re) is λ/4 when an incident wavelength on the retarder film is taken as X. However, in order to give such a case, the opposite property to the above property, that is, a property that the Re becomes larger as wavelength is longer is necessary.

Japanese Patent Application Laid-Open No. 62430/2002 (JP-2002-62430A, Patent Document 1) mentions that a retarder film having the above wavelength property (wavelength dispersion property) is obtained by drawing a cellulose triacetate. A cellulose triacetate is poor in drawability. Therefore, the variable degree of the drawing ratio occurs, then uneven phase difference and further uneven display is generated. Although to obtain a drawable cellulose derivative film from a cellulose acetate having a low degree of substitution or a mixed fatty acid ester of cellulose is being attempted, such a film is insufficient in drawability, retardation (thickness retardation Rth) and moisture resistance.

In this manner, a cellulose acetate has poor drawability. Such a reason includes that, as mentioned above, (1) the width of the temperature at which the cellulose acetate can be molded is narrow due to a melting temperature of the cellulose acetate close to a decomposition temperature thereof. Moreover, such a reason also includes that (2) the cellulose acetate is smaller in flexibility than a kind of an ethylene polymer or others due to an inflexible glucose ring of a cellulose and a hard and bending-resistant glucosidic linkage (β-glucosidic linkage) thereof, and others.
In particular, because of the latter reason, the cellulose acetate molecules has less entanglement in melting, and further, the melt viscosity becomes to increase the dependence on the shear rate. Accordingly, the melt viscosity changes depending on slight variation of the shear rate in heat melt-molding, thereby flatness of thickness tends to occur in thus molding matter.

Techniques for improving thermofusibility or melt formability (or melt moldability) of the cellulose acetate have been also reported. For example, Japanese Patent Application Laid-Open No. 16062/1980 (JP-55-16062A, Patent Document 2) discloses a method for improving moldability by adding a plasticizer to a cellulose acetate having a low degree of substitution. However, even in such a method, improvement in thermoformability cannot be enough. The cellulose acetate has a high hygroscopicity due to the large number of hydroxyl groups.

On the other hand, Japanese Patent Application Laid-Open No. 188401/1985 (JP-60-188401A, Patent Document 3) discloses a fatty acid cellulose ester thermoplastic molding material which is obtained by adding a cyclic ester (e.g. , ε-caprolactone) to a fatty acid cellulose ester having a free hydroxyl group (e.g., a cellulose acetate) in a proportion of 0.5 to 4.0 mol per an anhydrous glucose unit of the ester. This document also describes that the material can be molded or shaped with the use of an injection molding, an extrusion molding or others by internal plasticization without adding a large amount of a plasticizer and can be used for a molded product such as a sheet or a film. Japanese Patent Application Laid-Open No. 155710/1985 (JP-60-155710A, Patent Document 4) discloses a process for forming a yarn, which comprises melting a fatty acid cellulose ester (modified cellulose acetate) described in the Patent Document 2 at 170 to 350°C and spinning the melt into the air to give a yarn (Claims). Japanese Patent Application Laid-Open No. 212422/1985 (JP-60-212422A, Patent Document 5) discloses a graft copolymer (cellulose ester) having as a graft chain an ester derived from a caprolactone. This document mentions that a primary hydroxyl group existing on a graft chain end of the graft copolymer is allowed to react with an isocyanate group, an acid halide group and/or an epoxy group to chemically modify or crosslink the graft copolymer.

Although these cellulose esters described in these documents can relatively improve in moldability, these cellulose esters are high in hygroscopicity due to hydroxyl group thereof as with the above case, thereby the dimensional stability tends to lower.

Incidentally, Japanese Patent Application Laid-Open No. 221101/1988 (JP-63-221101A, Patent Document 6) discloses a modified cellulose derivative which is obtained by ring-opening polymerizing a residual hydroxyl group in a cellulose derivative with ε-caprolactone to graft a polymer chain derived from the ε-caprolactone to the cellulose derivative, and further introducing a silyl group to a hydroxyl group of the polymer chain end. In this document, as a silyl group-containing compound used for introducing the silyl group, a compound having a reactive group to a hydroxyl group (e.g., a carboxyl group, and an isocyanate group) and a hydrolyzed condensate group (e.g., a chlorine atom bonded with a silicon atom, and an alkoxy group) is exemplified. Moreover, the document mentions that the modified cellulose derivative is used as a coating vehicle; and that the modified cellulose derivative comes in contact with some water in conjunction with film forming, and therefore a hydrolyzable group in the silyl group-containing compound is hydrolyzed so that the silyl group is intercrosslinked.
[Patent Document 1] JP-2002-62430A (Claims)
[Patent Document 2] JP-55-16062A (Claims)
[Patent Document 3] JP-60-188401A (Claims, the lower right column of page 2)
[Patent Document 4] JP-60-155710A (Claims)
[Patent Document 5] JP-60-212422A (Claims)
[Patent Document 6] JP-63-221101A (Claims, the lower right column of page 2 to the lower right column of page 3, and the upper right column of page 5)
[Nonpatent Document 1] Cellulose Commun Vol. 5, No.2 (1998)

### DISCLOSURE OF THE INVENTION

### PROBLEMS TO BE SOLVED BY THE INVENTION

It is therefore an object of the present invention to provide a novel glucan derivative (particularly, a derivative of a cellulose acylate such as a cellulose acetate) can be inhibited in hygroscopicity at a high level and is useful for molding as a thermoplastic resin.

It is another object of the present invention to provide a glucan derivative (particularly, a derivative of a cellulose acylate such as a cellulose acetate) which has an excellent compatibility with a plasticizer or an excellent solubility in a solvent, and is useful for improving extensive physical properties (e.g., elastic modulus and elasticity).

It is still another object of the present invention to provide a process for conveniently and efficiently producing a novel glucan derivative which can be inhibited in hygroscopicity at a high level and is useful for molding as a thermoplastic resin.

It is a further object of the present invention to provide a glucan derivative (particularly, a derivative of a cellulose acylate such as a cellulose acetate) which has an excellent dimensional stability and is useful for obtaining a molded article such as a fiber or a film (particularly, an optical film), and a molded article thereof.

### MEANS TO SOLVE THE PROBLEMS

The inventors of the present invention made intensive studies to achieve the above objects and finally found that a glucan derivative having an acyl group (particularly, a derivative of a cellulose acylate such as a cellulose acetate) and a graft chain formed from (or derived from) a lactone can be preferably molded as a thermoplastic resin and can be inhibited in hygroscopicity at a high level by protecting a hydroxyl group located on the graft chain end or other position with a protecting group such as acetyl group (a nonreactive protecting group). The present invention was accomplished based on the above findings.

That is, the glucan derivative of the present invention comprises a glucan having an acyl group, and a graft chain, in which the acyl group and the graft chain bond to a glucose unit of the glucan, wherein the graft chain is formed from (or derived from) at least one graft component selected from the group consisting of a lactone and a hydroxycarboxylic acid, and has a hydroxyl group. In the glucan derivative, at least part of the hydroxyl group in the graft chain is protected with a protecting group. The graft chain may be formed by graft-polymerizing a graft component, or the graft chain may be obtained by polymerizing a graft component. The glucan may be a cellulose. The graft chain may be formed from a C₄₋₁₆lactone (e.g., ε-caprolactone), and the hydroxyl group in the graft chain may be protected with an acyl group [for example, an alkylcarbonyl group (e.g., a C₂₋₈alkylcarbonyl group such as acetyl group, propionyl group or butylyl group, preferably a C₂₋₄alkylcarbonyl group, particularly acetyl group)]. The degree of substitution (average degree of substitution) of the acyl group bonding to the glucose unit may be from 1 to 2.99, and the degree of substitution (average degree of substitution) of the graft chain may be from 0.01 to 2. The representative examples of the glucan derivative may include a glucan derivative in which the acyl group bonding to the glucose unit comprises at least an acetyl group. In such a glucan derivative, the degree of substitution of the acyl group may be from 1.5 to 2.95, the graft chain may be formed from a C₅₋₁₀lactone has a degree of substitution of 0.05 to 0.8, and the hydroxyl group in the graft chain may be protected with an acyl group (e.g., a C₂₋₆alkylcarbonyl group such as acetyl group, propionyl group or butylyl group).

Moreover, the proportion of the degree of substitution of the acyl group bonding to the glucose unit relative to that of the graft chain [the former/the latter] may be from 0.3/0.7 to 0.992/0.008, and the total of the degree of substitution of the acyl group and that of the graft chain may be from 2.5 to 3.

The process for producing the glucan derivative comprises a step for grafting to an acylated glucan at least one graft component selected from the group consisting of a lactone and a hydroxycarboxylic acid, and a step for protecting at least part of a hydroxyl group in the graft chain obtained by the grafting step with a protecting agent corresponding to a protecting group. In the acylated glucan, an acyl group bonds to a glucose unit. The graft component may be at least one component selected from the group consisting of a lactone and a hydroxycarboxylic acid. The protecting agent may comprise an acylating agent (e.g., an acetylating agent, and a propionylating agent). In particular, in the case where the hydroxyl group in the graft chain is acetylated, the protecting agent may comprise isopropenyl acetate.

In the protecting step of the production process, the residual hydroxyl group in the glucose unit may be acylated. For example, the production process may be a process for producing a glucan derivative, in which an acylated glucan having a residual hydroxyl group in the glucose unit is used as the acylated glucan. In the process, the protecting step may comprise providing an acylating agent as the protecting agent, acylating at least part of the hydroxyl group in the graft chain as well as the residual hydroxyl group (or part of the hydroxyl group) in the glucose unit.

The glucan derivative of the present invention is inhibited in hygroscopicity at a high level and can be used as a thermoplastic resin. Therefore, the glucan derivative can be preferably utilized as various molded articles (e.g., a fiber, and a film). Accordingly, the present invention also includes a molded article comprising (or formed from) the glucan derivative. Such a molded article (or molded product) may be a molded article obtained by injection-molding the glucan derivative (an injection-molded article of the glucan derivative). Moreover, the molded article may be, for example, a film comprising the glucan derivative [in particular, a film in which the glucan derivative comprises a cellulose acylate derivative (particularly, an optical film such as an optical compensation film for LCDs, or a polarizer protective film)].

In this specification, the term "derivative" means a compound having an acyl group and a graft chain (a graft chain in which at least part of a hydroxyl group is protected). Moreover, the term "cellulose acylate" means a compound in which an acyl group bonds to a cellulose, and the term "cellulose acylate derivative" means a compound in which a graft chain (a graft chain in which at least part of a hydroxyl group is protected) bonds to the "cellulose acylate".

Further, in this specification, the term "degree of substitution (or average degree of substitution) "means, in the case of a glucose unit, a degree of substitution (a proportion of substitution) to hydroxyl groups at 2-, 3- and 6-positions of a glucose unit, and is synonymous with the term "degree of substitution (or average degree of substitution)" in a cellulose ester or the like.

### EFFECTS OF THE INVENTION

The glucan derivative of the present invention (in particular, a cellulose acylate derivative such as a cellulose acetate) can be inhibited in hygroscopicity at a high level due to having a graft chain whose hydroxyl group is protected with an acyl group or others, and is useful for molding as a thermoplastic resin. Moreover, the glucan derivative has an excellent compatibility with a plasticizer or an excellent solubility in a solvent, and is useful for improving extensive physical properties (e.g., elastic modulus, and elasticity). Further, the present invention can conveniently and efficiently produce a glucan derivative which can be inhibited in hygroscopicity at a high level and is useful for molding as a thermoplastic resin. Such a novel glucan derivative (particularly, a cellulose acylate derivative such as a cellulose acetate) has an excellent dimensional stability due to remarkably inhibited hygroscopicity, and therefore the glucan derivative is useful for obtaining a molded article such as a fiber or a film (particularly, an optical film).

### DETAILED DESCRIPTION OF THE INVENTION

### [Glucan derivative]

The glucan derivative of the present invention comprises a glucan having an acyl group and a graft chain each bonding to a glucose unit thereof, and at least part of a hydroxyl group in the graft chain is protected with a protecting group. That is, in the glucan derivative, a hydrogen atom of a hydroxyl group contained in the glucose unit (or glucose skeleton) of the glucan (hydrogen atoms of hydroxyl groups located in 2-, 3- and 6 positions of the glucose unit) is replaced with the acyl group and the graft chain (or the acyl group and the graft chain bond to the hydroxyl group), and at least part of the hydroxyl group in the graft chain (usually, a terminal hydroxyl group) is protected (or capped) with a protecting group.

### (Glucan)

The glucan is not particularly limited to a specific one, and may include, for example, β-1,4-glucan, α-1,4-glucan, β-1,3-glucan, and α-1,6-glucan. The representative glucan may include, for example, a polysaccharide such as a cellulose, an amylose, a starch, a lentinan or a dextran. Among these glucans, a cellulose and a starch (or an amylose) are preferred from the industrial viewpoint, and particularly a cellulose is preferred. These glucans may be used singly or in combination.

In the glucan derivative of the present invention, an acyl group and a specific graft chain bond to a glucose unit through a hydroxyl group of the glucose unit. Incidentally, as described later, the glucan derivative of the present invention may have a hydroxyl group (an unsubstituted hydroxyl group).

### (Acyl group)

The acyl group may be suitably selected depending on application of the glucan derivative. For example, the acyl group may include an alkylcarbonyl group [e.g., a C₁₋₁₀alkylcarbonyl group such as acetyl group, propionyl group or butylyl group (e.g., a C₂₋₈alkylcarbonyl group, preferably a C₂₋₆alkylcarbonyl group, and more preferably a C₂₋₄alkylcarbonyl group)], a cycloalkylcarbonyl group (e.g., a C₅₋₁₀cycloalkylcarbonyl group such as cyclohexylcarbonyl group), an arylcarbonyl group (e.g., a C₇₋₁₂arylcarbonyl group such as benzoyl group), and others. These acyl groups may bond to the glucose unit singly or in combination. Among these acyl groups, an alkylcarbonyl group is preferred. In particular, it is preferred that at least acetyl group among these acyl groups bonds to the glucose unit. For example, only acetyl group may bond to the glucose unit, or acetyl group and other acyl group (e.g., a C₃₋₄acyl group) may bond to the glucose unit.

In particular, in the case where the glucan derivative is a cellulose acylate derivative, the cellulose acylate derivative which is excellent in thermoplasticity or drawability with keeping optical properties (e.g., a cellulose acetate propionate) can be obtained by selecting acetyl group and other acyl group (particularly propionyl group) as the acyl group bonding to the glucose unit. Incidentally, other acyl group (e.g., propionyl group) bonding to the glucose unit may be also introduced in a protecting step as described later.

### (Graft chain)

In the glucan derivative, the graft chain is formed from at least one graft component selected from the group consisting of a lactone and a hydroxycarboxylic acid.

The lactone is not particularly limited to a specific one as far as the lactone is a cyclic compound having at least one ester group (-COO-) in a molecule thereof and being graft-polymerizable to a glucan. The lactone may include a lactone having one ester group in a molecule thereof [for example, a C₃₋₂₀lactone such as β-propiolactone, γ-butyrolactone, 6-valerolactone, ε-caprolactone, enantholactone, dodecanolactone or an alkylcaprolactone (e.g., α-methyl-ε-caprolactone, and β-methyl-ε-caprolactone), preferably a C₄₋₁₅lactone, and more preferably a C₅₋₁₀lactone], a lactone having a plurality of ester groups (particularly two ester groups) in a molecule thereof (e.g., a cyclic diester such as glycolide or lactide), and others.

Examples of the hydroxycarboxylic acid (hydroxy acid) may include an aliphatic hydroxycarboxylic acid, e.g., a hydroxyC₂₋₁₀alkanecarboxylic acid such as glycolic acid, lactic acid, hydracrylic acid or α-oxybutyric acid. Among these hydroxycarboxylic acids, α-hydroxycarboxylic acid and ω-hydroxycarboxylic acid are particularly preferred from the viewpoint of thermal flowability (or thermal fluidity).

The graft components may be used singly or in combination. Among these graft components, a lactone (particularly, a C₄₋₁₅lactone having one ester group in a molecule thereof, such as ε-caprolactone) is preferred in the light of graft-polymerizability.

The graft chain formed from the graft component has a hydroxyl group derived from a lactone or a hydroxycarboxylic acid in at least an end thereof. Such a hydroxyl group deteriorates moisture resistance of the glucan derivative. According to the present invention, protection (or blocking or capping) of such a hydroxyl group in the graft chain with a protecting group ensures inhibition of hygroscopicity (or water-absorbing property) at a high level, and improvement in moisture resistance of the glucan derivative (particularly a cellulose acylate derivative).

### (Protecting group)

The protecting group is not particularly limited to a specific one as far as the group is a nonreactive group capable of protecting a hydroxyl group. The protecting group may include a hydrocarbon group such as an alkyl group [for example, a C₁₋₁₂alkyl group (preferably a C₁₋₁₀alkyl group, and more preferably a C₁₋₆alkyl group) which may have a substituent (e.g., a halogen atom), e.g., methyl group, ethyl group, propyl group, isobutyl group, t-butyl group, 2-cyclohexyl-2-propyl group, hexyl group, chloromethyl group, fluoromethyl group, trichloromethyl group, and trifluoromethyl group], a cycloalkyl group (for example, a C₅₋₈cycloalkyl group which may have a substituent, e.g., cyclohexyl group), an aromatic hydrocarbon group (e.g., a C₆₋₁₂aryl group such as phenyl group or naphthyl group, and an aralkyl group such as benzyl group), or a crosslinked (bridged) cyclic hydrocarbon group (a crosslinked bi- to tetracyclic C₃₋₃₀hydrocarbon group which may have a substituent, e.g., decalinyl group, adamantyl group, norbornyl group, and bornyl group); an oxacycloalkyl group (e.g., a 5- to 8-membered oxacycloalkyl group such as tetrahydrofuranyl group); an acetal protecting group such as an alkoxyalkyl group (e.g., a C₁₋₆alkoxy-C₁₋₆alkyl group such as 1-methoxyethyl group, 1-ethoxypropyl group or 1-methoxy-isopropyl group); and an acyl group such as an alkylcarbonyl group (a C₁-₁₀alkylcarbonyl group such as formyl, acetyl, propionyl, isopropionyl, butyryl, t-butyryl, valeryl or isovaleryl, preferably a C₂₋₈alkylcarbonyl group, more preferably a C₂₋₆alkylcarbonyl group, and particularly a C₂₋₄alkylcarbonyl group), a cycloalkylcarbonyl group (a C₅₋₈cycloalkylcarbonyl group such as cyclohexylcarbonyl group, preferably a C₅₋₆cycloalkylcarbonyl group), or an arylcarbonyl group (e.g., a C₆₋₁₀aryl-carbonyl group such as benzoyl group) (for example, the above-mentioned acyl group).

The protecting group does not include a group reactive to water [a hydrolyzed condensate group such as a group in which a halogen atom or an alkoxy group is attached to a silicon atom (e.g., an alkoxysilyl group, and a halosilyl group)].

The protecting groups may be used singly or in combination so as to protect the graft chain.

Among these protecting groups, a nonleaving protecting group such as an alkyl group or an acyl group is preferred. In particular, in the case of using the glucan derivative for a film (e.g. , an optical film) and others, the preferred protecting group includes an acyl group [particularly, an alkylcarbonyl group such as a C₂₋₈alkylcarbonyl group (e.g., acetyl group)], and others.

The preferred glucan derivative includes a cellulose acylate derivative in which an acyl group and the graft chain (a graft chain having a protected hydroxyl group) bond to a cellulose as a glucan (particularly, a cellulose acetate derivative).

The viscosity-average degree of polymerization of the glucan derivative (or glucan) of the present invention may be in the range of 20 to 1000 (e.g., 50 to 800), and for example, from 80 to 600 (e.g., from 100 to 500), preferably from 200 to 450 (e.g., from 250 to 400) and more preferably from 270 to 380 (e.g., from 280 to 350).

### (Proportions of acyl group and graft chain)

In the glucan derivative, the degree of substitution (the average degree of substitution) of the acyl group bonding to the glucose unit may be in the range of 0.5 to 2.999, and for example, from 1 to 2.99 (e.g., from 1.5 to 2.98), more preferably from 2 to 2.97, most preferably from 2.5 to 2.96, particularly from 2.7 to 2.95 (e.g., from 2.8 to 2.92) and usually from 1.5 to 2.95 (e.g., from 1.5 to 2.90). The phrase "acyl group bonding to a glucose unit" means an acyl group which is substituted for a hydrogen atom of a hydroxyl group derived from a glucose (hydroxyl groups at 2-, 3- and 6-positions), and does not mean an acyl group as a protecting group protecting a hydroxyl group in the graft chain.

Moreover, in a glucan derivative in which the acyl group bonding to the glucose unit comprises acetyl group and other acyl group (e.g., a C₃₋₆alkylcarbonyl group such as propionyl group or butylyl group, preferably a C₃₋₄alkylcarbonyl group) (particularly, in a cellulose acetate C₃₋₆acylate such as a cellulose acetate propionate or a cellulose acetate butyrate), the proportion of the acetyl group relative to other acyl group (or the proportion of the degree of substitution of the acetyl group relative to the degree of substitution of other acyl group) [the former/the latter (molar ratio)] may be, for example, from 99/1 to 1/99, preferably from 95/5 to 5/95 and more preferably from 90/10 to 7/93. In particular, in the case where the degree of substitution of the acetyl group is made relatively large, the proportion of the acetyl group relative to other acyl group [the former/the latter (molar ratio)] may be from 99/1 to 50/50, preferably from 95/5 to 60/40 and more preferably from 94/6 to 70/30. (ii) In the case where the degree of substitution of the acetyl group is made relatively small, the proportion of the acetyl group relative to other acyl group (or the proportion of the degree of substitution) [the former/the latter (molar ratio)] may be from 50/50 to 1/99, preferably from 40/60 to 3/97 and more preferably from 20/80 to 5/95.

Moreover, in the glucan derivative, the degree of substitution (the average degree of substitution) of the graft chain bonding to the glucose unit (or graft chain having a protected hydroxyl group) may be from 0.01 to 2 (e.g. , from 0.01 to 1.5), preferably from 0.02 to 1.2 (e.g., from 0.03 to 1), more preferably from 0.05 to 0.8 and particularly from 0.08 to 0.5 (e.g., from 0.09 to 0.3).

The proportion of the degree of substitution of the acyl group relative to the average degree of substitution of the graft chain [the former/the latter] may be from 0.1/0.9 to 0.995/0.005 (e.g., from 0.3/0.7 to 0.992/0.008), preferably from 0.5/0.5 to 0.99/0.01 and more preferably from 0.6/0.4 to 0.98/0.02.

The total of the degree of substitution of the acyl group and the average degree of substitution of the graft chain (total of degree of substitution) is close to 3, and may be, for example, from 2.5 to 3, preferably from 2.7 to 2.999, more preferably from 2.9 to 2.998 and particularly from 2.95 to 2.995.

Moreover, in the graft chain of the glucan derivative, the proportion of the protecting group (or the proportion of the protected hydroxyl group in the graft chain) relative to 1 mol of the graft chain may be selected within the range of 0.7 to 1 mol, and may be, for example, from 0.9 to 1 mol, preferably from 0.95 to 0.999 mol and more preferably from 0.97 to 0.998 mol (e.g., from 0.98 to 0.997 mol).

The glucan derivative may have a hydroxyl group (e. g. , an unsubstituted and/or unprotected hydroxyl group) as far as moisture resistance is not deteriorated in the glucan derivative. For example, the hydroxyl group in the graft chain may be at least partly protected, and the graft chain may contain a hydroxyl group which is not protected. The glucan derivative may have a hydroxyl group of the glucose unit (an unsubstituted hydroxyl group). In the case where the amount of such a hydroxyl group is too large, there is a possibility of decaying moisture resistance of the glucan derivative.

Therefore, in the glucan derivative, it is preferred that the proportion (concentration) of such a hydroxyl group (e.g., a hydroxyl group of the glucose unit and/or a hydroxyl group in the graft chain) is as small as possible. The proportion (concentration) may be selected within the range of 0 to 0.5 mol relative to 1 mol of the glucose unit constituting the glucan derivative, and for example, may be from 0 to 0.2 mol, preferably from 0.001 to 0.1 mol and more preferably from 0.003 to 0.05 mol (e.g., from 0.005 to 0.01 mol) relative to 1 mol of the glucose unit constituting the glucan derivative. In particular, in the glucan derivative, the proportion of the hydroxyl group in the graft chain (the hydroxyl group which is not protected) relative to 1 mol of the graft chain may be selected within the range of 0 to 0.3 mol, and may be, for example, from 0 to 0.1 mol, preferably from 0.001 to 0.05 mol and more preferably from 0.002 to 0.03 mol (e.g. , from 0.003 to 0.02 mol).

In the glucan derivative of the present invention, since the hydroxyl group of the glucan derivative is acylated and/or protected at such an extremely high level, the glucan derivative is preferably utilized as a thermoplastic resin (for example, can be subjected to thermoforming) as well as realizes inhibition of moisture sorption.

The number-average degree of polymerization of the graft chain (or the average number of moles of the graft component constituting the graft chain) per one graft chain may be selected within the range of 0.5 to 300, and may be, for example, from 1 to 100, preferably from 1.5 to 80, more preferably from 1.8 to 50 (e.g., from 2 to 30) and particularly from 5 to 25 (e.g., from 10 to 20). Moreover, the molar substitution of the graft component may be selected within the range of 0.05 to 100 mol on the average per 1 mol of the glucose unit of the glucan derivative, and may be, for example, from 0.08 to 50 mol, preferably from 0.1 to 30 mol and more preferably from 0.15 to 10 mol (e.g., from 0.2 to 5 mol).

Further, in the glucan derivative, the degree of grafting [(the weight of the graft chain/the weight of the glucan) x 100 (%)] may be, for example, from 1 to 500%, preferably from 5 to 300% and more preferably from 8 to 200%.

In the glucan derivative, the degree of substitution of the acyl group or graft chain, the concentration of the hydroxyl group, the proportion of the graft component may be determined by a conventional method, for example, a nuclear magnetic resonance spectrum (NMR) (e.g., ¹H-NMR, and ¹³C-NMR).

### [Production process of glucan derivative]

The glucan derivative of the present invention may be obtained by bonding an acyl group and the above-mentioned graft chain to a glucan, then protecting a hydroxyl group in the graft chain with a protecting agent of the protecting group. The reaction order of the bonding of the acyl group, the bonding of the graft chain and the protecting with the protecting agent is not particularly limited to a specific one. For example, these steps may be carried out in the following manner: (i) grafting the component to an acylated glucan bonded an acyl group (e.g., a cellulose acylate such as a cellulose acetate), then protecting a hydroxyl group in the graft chain; (ii) grafting the component to a glucan, protecting a hydroxyl group in the graft chain with the protecting agent, then bonding an acyl group; or (iii) grafting the component to a glucan, bonding an acyl group to the glucan, then protecting a hydroxyl group in the graft chain obtained by the grafting step with the protecting agent.

In the present invention, from the viewpoint of producing the glucan derivative efficiently, the glucan derivative is usually produced by the above-mentioned process (i) in many cases. That is, the production process of the glucan derivative usually comprises a step for grafting the component to a glucan having an acyl group bonding to a glucose unit (acylated glucan) (a grafting step), and a step for protecting at least part of a hydroxyl group in the graft chain obtained by the grafting step with a protecting agent corresponding to a protecting group (a protecting step) in many cases.

### (Grafting step)

In the grafting step, as an acylated glucan (e.g., a cellulose acylate), a commercially available compound (e.g., a cellulose acetate) or a product synthesized by a conventional method may be used. For example, a cellulose acylate may be usually produced by steps as follows: activation wherein a cellulose is protected with an organic carboxylic acid corresponding to an acyl group (e.g., acetic acid), acylation wherein a triacyl ester (particularly, a cellulose triacetate) is prepared from the cellulose with an acylating agent (e.g., an acid anhydride such as acetic anhydride) in the presence of a sulfuric acid catalyst, and hydrolyzing (saponifying or aging) wherein an excess amount of the acylating agent (particularly, an acid anhydride such as acetic anhydride) is hydrolyzed and the triacyl ester is hydrolyzed to adjust the degree of acylation. As the acylating agent, an organic acid halide such as acetyl chloride may be used, and usually, a C₂₋₆alkanecarboxylic acid anhydride such as acetic anhydride, propionic anhydride or butyric anhydride, and others may be employed.

A common production process of a cellulose acylate may be referred to "Wood Chemistry (the first volume)" (Migita et al., issued by Kyoritsu Shuppan Co., Ltd. in 1968, pages 180 to 190). Moreover, other glucan (e.g., a starch) may be also acylated (and deacylated) in the same manner as the case of the cellulose acylate.

The acylated glucan may be a glucan having a degree of substitution of an acyl group corresponding to a glucan derivative as an object product, or may be a glucan having a degree of substitution of an acyl group lower than that of an object product. For example, in the case where an object product is a cellulose triacetate (e.g. , a cellulose triacetate having a degree of substitution of the acetyl group of 2.8 to 2.9) derivative having the graft chain bonding thereto, the object product may be produced by a cellulose acetate having a smaller degree of substitution of an acyl group [e.g., a cellulose diacetate having a degree of substitution of 2.35 to 2.55 (particularly, 2.4 to 2.5)] to the grafting step, after the grafting step then further acylating the resulting matter in a proper stage [usually, after the protecting step, or in parallel with the protecting step (or as a consecutive reaction)]. The above-mentioned glucan having a low degree of substitution of an acyl group (e.g., a cellulose diacetate) can be dissolved at a high concentration in a variety of solvents due to excellent solubility in organic solvents, and therefore the glucan is advantageous for the grafting reaction.

For the reason as mentioned above, an acylated glucan having a residual hydroxyl group in the glucose unit may be used as the acylated glucan. Therefore, the degree of substitution in the acylated glucan used for the grafting step (the degree of substitution of the acyl group) may be from 0.8 to 2.8 (e.g., from 1 to 2.75), preferably from 1.5 to 2.7 and more preferably from 2 to 2.6 (e.g., from 2.3 to 2.5). Moreover, in the acylated glucan used for the grafting step, the proportion of the hydroxyl group relative to 1 mol of the glucose unit constituting the glucan may be from 0.2 to 2.2 mol (e.g., from 0.25 to 2 mol), preferably from 0.3 to 1.5 mol and more preferably from 0.4 to 1 mol (e.g., from 0.5 to 0.7 mol). The hydroxyl group is also referred to as the residual hydroxyl group, the hydroxyl group of the glucose unit. The above-mentioned glucan derivative may be obtained by further acylating a residual hydroxyl group or at least part thereof in the after-mentioned protecting step or after the protecting step.

Depending on the kind of the graft component, the grafting step may be carried out in the presence of a catalyst used for a ring-opening reaction of a cyclic ester (ring-opening polymerization). The catalyst may include, for example, an organic acid, an inorganic acid, an organotin compound or a stannate of an organic acid (e.g. , dibutyltin laurate), chlorostannate, an alkali metal, an organoalkali metal compound, an organoaluminum compound (e.g., an aluminum alkylate), an organotitanium compound (e.g., a titanium tetraalkoxide such as tetrapropyl titanate or tetraisopropyl titanate) and an organozirconium compound. The catalysts may be used singly or in combination. The grafting step may be conducted in a solvent-free condition or may be conducted in a solvent, and may be usually conducted in a solvent. The solvent to be used may be as follows: an aromatic solvent such as toluene or xylene. The graft component (e.g., a lactone) may be used as the solvent.

Further, the grafting step may be carried out at a room temperature or on heating, or may be carried out under a standard pressure or pressurization. Moreover, the grafting step may be conducted with stirring, or conducted in the air or an inert gas (e.g. , nitrogen, and a rare gas). The grafting condition (e.g., the catalyst, the solvent, and the grafting temperature) may be referred to the Patent Documents 3 to 5 and others.

### (Protecting step)

In the protecting step, at least a hydroxyl group in the graft chain produced by the grafting (grafting step) is protected with a protecting agent corresponding to a protecting group. The hydroxyl group in the graft chain (at least part of the hydroxyl group in the graft chain) is protected (or capped) by allowing a glucan having an acyl group and the graft chain to react with a protecting agent.

The protecting agent is not particularly limited as far as the agent is a compound corresponding to a protecting group (or a compound having a protecting group) and is allowable to react with the hydroxyl group to form a bond. In the case where the protecting group is an alkyl group, a metal alkoxide (e.g., a sodium alkoxide such as sodium methoxide) may be used as a protecting agent. In the case where the protecting group is an acyl group, an acylating agent may be preferably used as a protecting agent. In particular, use of the acylating agent as a protecting agent also ensures acylation of an acylated glucan having a residual hydroxyl group.

The acylating agent to be used as a protecting agent may include an acid halide (e.g., an alkylcarbonyl chloride such as acetyl chloride, propionyl chloride or butyryl chloride), an acid anhydride (e.g., acetic anhydride, propionic anhydride, and butyric anhydride), and in addition, an alkenyl acylate [for example, 1-alkenyl acylate (e.g., an isopropenyl ester of a C₂₋₆alkanecarboxylic acid such as isopropenyl acetate)], and others. In particular, in the case of using a 1-alkenyl acylate (e.g., isopropenyl acetate) as an acylating agent, a by-product produced after protection (acylation) is a corresponding ketone (e.g., acetone). Accordingly, recovery and refinement of the glucan derivative can be simplified. The protecting agents (e.g., acylating agents) may be used singly or in combination.

The amount of the protecting agent relative to 1 mol of the hydroxyl group in the graft chain may be from 0.9 to 8 mol (e.g., from 1 to 6 mol), preferably from 1.2 to 5 mol and more preferably from 1.5 to 4 mol.

In the protecting step, a catalyst may be used for the reaction of the glucan and the protecting agent. The catalyst may include an inorganic base such as a base catalyst {for example, a metal hydroxide (e.g., an alkali metal or alkaline earth metal hydroxide such as sodium hydroxide) or a metal carbonate (e.g., an alkali metal or alkaline earth metal carbonate such as sodium carbonate, and an alkali metal or alkaline earth metal hydrogen carbonate such as sodium hydrogen carbonate); an organic base such as an amine [for example, a tertiary amine (e.g., a trialkylamine such as triethylamine, and an aromatic tertiary amine such as pyridine or N,N-dimethylaniline] or a metal salt of a carboxylic acid (e.g., an alkali metal or alkaline earth metal salt of acetic acid such as sodium acetate or calcium acetate)}, and an acid catalyst {for example, an inorganic acid (e.g., sulfuric acid), and an organic acid [for example, an organic sulfonic acid (e.g., an alkanesulfonic acid such as methanesulfonic acid, and an arenesulfonic acid such as paratoluenesulfonic acid), and an organic carboxylic acid (e.g., acetic acid)]}. The catalysts may be used singly or in combination. The amount of the catalyst may be from 0.001 to 1 mol, preferably from 0.01 to 0.8 mol and more preferably from 0.05 to 0.5 mol relative to 1 mol of the hydroxyl group in the graft chain.

Moreover, the reaction of the glucan and the protecting agent may be carried out in a solvent-free condition or may be carried out in a solvent (a solvent nonreactive to the protecting agent). It is sufficient that the solvent is a solvent which is nonreactive to the protecting agent. Such a solvent may include, for example, an ether (e.g., a chain ether such as diethyl ether, and a cyclic ether such as tetrahydrofuran or dioxane), an ester (e.g. , an ester of acetic acid such as methyl acetate, ethyl acetate, amyl acetate or butyl acetate), a ketone (e.g., a dialkyl ketone such as acetone, methyl ethyl ketone or methyl isobutyl ketone, and a cyclohexanone), a halide solvent (e.g., a halogenated hydrocarbon such as methylene chloride, chloroform or carbon tetrachloride), an aromatic solvent (e.g., benzene, toluene, and xylene), and a nitrogen-containing solvent (e.g., pyridine). The solvents may be used singly or in combination. The amount of the solvent may be from 0.3 to 100 parts by weight, preferably from 0.5 to 50 parts by weight and more preferably from 1 to 30 parts by weight relative to 1 part by weight of the glucan.

The reaction of the glucan with the protecting agent may be carried out at a room temperature or on heating, and may be usually carried out on heating. In the case of heating, the reaction temperature may be from 40 to 150°C, preferably from 50 to 130°C and more preferably from 60 to 110°C. Moreover, the reaction of the glucan with the protecting agent may be carried out under a standard pressure or pressurization. Further, the reaction may be conducted with stirring, or conducted in the air or an inert gas (e.g., nitrogen, and a rare gas). The reaction time may be from 30 minutes to 48 hours, preferably from 1 to 24 hours and more preferably from 1 to 10 hours.

In the protecting step, a product obtained by the grafting step (a glucan having an acyl group and the graft chain) may be separated (and refined), and reacted with the protecting agent. Alternatively, the protecting step may be conducted continuously in the same reactor as the grafting step. In the case of conducting the protecting step after the grafting step, a solvent may be added to the dope if necessary to decrease the viscosity of the dope. As other method for decreasing the viscosity of the dope, a large or excessive amount of the graft component (e.g. , a lactone) may be added in the grafting step beforehand to use the excessive amount of the graft component as a solvent in the protecting step.

Moreover, in the grafting step, in the case of using an acylated glucan having a residual hydroxyl group in a glucose unit (or in the case of using an acylated glucan having a smaller degree of substitution than that of an object product), further acylation may be done to obtain an object product. Such acylation may be conducted in a suitable stage after the protecting step. Such acylation may be conducted by separating (and refining) a product obtained by the protecting step and reacting the separated (and refined) product with the acylating agent in the same manner mentioned above. Moreover, such acylation may be conducted in the same reactor as the protecting step. For example, after the protecting step, the acylating agent may be added to the same reactor as the protecting step to further acylate the hydroxyl group of the glucose unit.

On the other hand, in the case of using an acylating agent as the protecting agent, the acylating agent can protect (in other words, acylate) the hydroxyl group in the graft chain and also the residual hydroxyl group of the acylated glucan (the hydroxyl group of the glucose unit). That is, by using the acylating agent as the protecting agent, in the protecting step the hydroxyl group in the graft chain (or at least part thereof) can be acylated and the residual hydroxyl group of the acylated glucan (or at least part thereof) can be acylated. Such an acylating agent may representatively include an acid anhydride (e.g., acetic anhydride, and propionic anhydride), and others. In particular, when the acylated glucan having the residual hydroxyl group is acylated with the acylating agent containing propionic anhydride, since the residual hydroxyl group of the acylated glucan can be propionylated, thermoformability or drawability can be improved.

In the case of using the acylating agent as the protecting agent, in the protection and acylation conducted in the same reactor, the amount of the acylating agent in the protecting step (and acylation) may be from 0.9 to 5 mol, preferably from 1 to 4.5 mol and more preferably from 1.2 to 4 mol relative to 1 mol of the total amount of the hydroxyl group of the glucose unit and the hydroxyl group in the graft chain (that is, relative to 1 mol of the residual hydroxyl group).

The reaction mixture after completion of the reaction (after the protecting step) may be separated and purified by a conventional method, for example, a separation means such as filtration, condensation, distillation, extraction, neutralization or precipitation, or a combination thereof. In particular, in the case of using a base catalyst or an acid catalyst as a catalyst, such a catalyst may be neutralized with a proper neutralizing agent for improving stability in the produced glucan derivative. Moreover, if necessary, component(s) used in the reaction (the grafting step, the protecting step) (e.g., the solvent, the graft component) may be recovered by an operation such as distillation.

The glucan derivative obtained by such a process is useful as a thermoplastic resin, and may be used in the form of a particulate, a pellet (e.g., a polymer pellet, and a master batch pellet), a solvent-containing composition (e.g., a dope, and a coating composition), and others.

The glucan derivative may constitute a polymer composition. In such a polymer composition, the glucan derivatives may be used singly or in combination. Moreover, the polymer composition may contain other polymer as a polymer component. Other polymer may include, for example, an olefinic polymer, an acrylic polymer, a styrenic polymer, a polycarbonate, a polyester, a polyacetal, a polyamide, a polyphenylene ether, a polyphenylene sulfide, a thermoplastic elastomer, a glucan derivative which is beyond the above-mentioned scope (e.g., a cellulose acylate such as a cellulose acetate), and others. Other polymers may be used singly or in combination.

The polymer composition may contain a conventional additive, for example, a filler or reinforcer, a coloring agent (a colorant), an electroconductive agent, a flame retardant, a plasticizer, a lubricant, a stabilizer (e.g., an antioxidant, an ultraviolet ray absorbing agent, and a heat stabilizer), a mold-releasing agent, an antistatic agent, and others. These additives may be used singly or in combination.

### [Molded article of glucan derivative and molding process thereof]

The glucan derivative of the present invention (or a composition thereof) is inhibited in hygroscopicity at a high level and is excellent in moldability, solubility in a solvent and others, and may be preferably used as a thermoplastic resin. Moreover, the present invention can obtain a glucan derivative having a wide range of elastic modulus or elasticity (or drawability) by adjusting an amount of a graft chain to be added, and others. Accordingly, the glucan derivative of the present invention (the cellulose acylate derivative) is useful for molding various molded articles (a one-dimensional molded article such as a fiber, a two-dimensional molded article such as a film, a sheet or a coating film (or thin film), and a three-dimensional molded article). The sheet (or film) may be a single layer sheet, or a laminated sheet formed from a multilayer. In such a laminated sheet, each sheet constituting the laminated sheet may have a different elastic modulus from each other.

The process for molding the glucan derivative of the present invention is not particularly limited to a specific one, and a conventional molding process is applicable. That is, the glucan derivative can be efficiently molded even by a process accompanied by melting (e.g., a molding process such as an extrusion molding or an injection molding, and a melt spinning) due to thermoplasticity thereof. In particular, since the graft chain reduces crystallinity, the glucan derivative enhances compatibility with a plasticizer and is easy to apply a molding process accompanied by melting. Moreover, the glucan derivative is also applicable to a process utilizing solubility in a solvent (e.g., a molding process such as a solvent cast (or solution casting), and a dry spinning process) due to an excellent solubility in a solvent. In particular, even in the case where the glucan constituting the glucan derivative is a glucan having a high degree of substitution of an acyl group (e.g., a cellulose triacetate), the glucan derivative can reduce crystallinity by a graft chain thereof to enhance solubility in a solvent. Therefore, the glucan derivative having a high degree of substitution of an acyl group (e.g., a cellulose triacetate derivative) can be dissolved in a solvent for molding (e.g., film forming, and spinning) without using a conventional halogen-containing solvent (e.g., methylene chloride).

Therefore, the molding process of the glucan derivative may include a known molding process, for example, an extrusion molding, an injection molding, an injection-compression molding, a transfer molding, a blow molding, a coating (e.g., a solvent cast such as a spin coating, a roll coating, a curtain coating, a dip coating or a casting molding), a spinning (e.g., a melt spinning, a dry spinning, and a wet spinning).

In particular, the glucan derivative of the present invention (particularly, a cellulose acylate derivative such as a cellulose acetate derivative) can be preferably applied to an injection molding from the viewpoint of productivity. Therefore, the present invention also includes a molded article (or a molded product) obtained by injection-molding the glucan derivative (particularly, a cellulose acylate derivative) (or a composition thereof). The molding temperature (cylinder temperature) in the injection molding is not particularly limited to a specific one, and may be from 100 to 250°C (e.g., from 100 to 220°C), preferably from 120 to 240°C (e.g., from 120 to 200°C) and more preferably from 130 to 230°C (e.g., from 130 to 180°C). Moreover, the mold temperature is not particularly limited to a specific one, and may be selected within the range of 30 to 150°C. For example, the mold temperature may be from 40 to 120°C and preferably from 45 to 110°C (e.g., from 50 to 100°C).

Further, the glucan derivative of the present invention [particularly, a cellulose acylate derivative obtained by using a cellulose as a glucan (e.g., a cellulose acetate derivative)] is useful for forming a fiber since the glucan derivative can be efficiently spun by a process such as a melt spinning or a dry spinning.

The fiber may be produced by a conventional process, for example, a process which comprises spinning a solution (dope) of a glucan derivative (particularly, a cellulose acylate derivative) by the above-mentioned spinning process and removing a solvent therefrom. The fineness of the fiber is from 1 to 16 denier, preferably from 1 to 10 denier and more preferably from 2 to 8 denier. The cross-sectional configuration of the fiber is not particularly limited to a specific one, and may be, for example, a circular form, an elliptical form, a modified form (e.g., Y-, X-, I- or R-form) or a hollow form.

Incidentally, an organic solvent for preparing a dope may be a chlorine-containing organic solvent (e.g., dichloromethane, and chloroform) or a non-chlorine organic solvent. The glucan derivative of the present invention (a cellulose acylate derivative) is high in solubility, and is easy to dissolve in a non-chlorine organic solvent. As the non-chlorine organic solvent, there may be mentioned an ester (e.g., methyl acetate, ethyl acetate, amyl acetate, and butyl acetate), a ketone (e.g., acetone, methyl ethyl ketone, methylisobutylketone, and cyclohexanone), an ether (e.g., dioxane, tetrahydrofuran, and diethyl ether), an alcohol (e.g., methanol, ethanol, isopropanol, and n-butanol), and others. These solvents may be used singly or in combination, or a mixture of the chlorine-containing solvent and the non-chlorine solvent may be used. Further, the fiber may be a non-crimped fiber or a crimped fiber. Incidentally, removal of the solvent may be carried out under a heated condition, for example, a temperature of 70 to 200°C.

Further, since the glucan derivative [particularly, the cellulose acylate derivative (e. g. , a cellulose acetate derivative)] is excellent in mechanical properties, moldability and others, and also has an excellent dimensional stability, the glucan derivative is useful for forming various films. Furthermore, such a cellulose acylate derivative is useful for forming an optical material, particularly an optical film, due to the excellent optical properties (e.g., low birefringence, transparency, and optical isotropy). The process for producing the film of the glucan derivative (particularly, a film of a cellulose acylate derivative) may use a melt casting (e.g., an extrusion molding) or a solvent cast (e.g., a band casting). By using the solvent cast, the surface of the film may be improved.

In the solvent cast, a filmmay be produced by casting a dope (or an organic solvent solution) containing the glucan derivative (particularly, a cellulose acylate derivative such as a cellulose acetate) and an organic solvent on a supporter, separating (or releasing) the film from the supporter, and drying the film.

The supporter may be usually a metal supporter (e.g., a stainless steel), and may be a drum or an endless belt. The surface of the supporter is usually smoothed by to a mirror finish.

The organic solvent for preparing the dope includes the same as the above-mentioned, and may be a chlorine-containing organic solvent (e.g., dichloromethane, and chloroform) or a non-chlorine organic solvent. The glucan derivative of the present invention (a cellulose acylate derivative) is high in solubility, and is easy to dissolve in a non-chlorine organic solvent. Therefore, a dope of a non-chlorine organic solvent can be preferably prepared. The non-chlorine organic solvent may include, as mentioned above, an ester, a ketone, an ether, an alcohol, and others. These solvents may be used singly or in combination.

To the dope may be added various additives, for example,a plasticizer,astabilizer (e.g.,an antioxidant, an ultraviolet ray absorbing agent, and a degradation inhibitor or deterioration inhibitor), a lubricant (e.g., a particulate lubricant), a flame retardant, a mold-releasing agent, and others. Moreover, to the dope may be added a retardation increasing agent (Japanese Patent Application Laid-Open No. 139621/2001 (JP-2001-139621A)), a release agent (Japanese Patent Application Laid-Open No. 309009/2002 (JP-2002-309009A)), and others.

Incidentally, the dope may be prepared by means of a conventional method, for example, a heating dissolution method, and a cooling dissolution method. The concentration of the cellulose ester in the dope may be from 10 to 35% by weight and preferably from 15 to 25% by weight (e.g., from 15 to 25% by weight) . Moreover, in order to obtain a high-quality film (e.g. , a film for LCDs), the dope may be filtered.

The dope may be solvent-cast on the supporter with the use of a casting die or others, and dried. The dope is usually solvent-cast on the supporter and pre-dried (to a pre-dried film containing an organic solvent), and then the film is dried.

In the melt casting, the film may be produced as follows: the glucan derivative (a cellulose acylate derivative) is mixed in melt with an extruder or other device, then the melt mixture is extruded from a die (e.g., a T-die, and a ring die), and the extruded matter is cooled to give a film. The melt-mixing temperature may be selected within the range of, for example, 120 to 250°C.

The glucan derivative of the present invention (usually, a cellulose acylate derivative) is high in drawability as mentioned above, and the film obtained from the glucan derivative is easy to control a retardation (Re, Rth) by a draw ratio (that is, a degree of orientation S). That is, in order to control the retardation (Re, Rth), an oriented film may be used. The method for orienting the film may include a conventional method (e.g., drawing, and stretching) for a uniaxial or biaxial orientation. The orientation method may use a draw ratio of a feeding roll, or drawing of the film with clipping an edge of the film with a chuck. As the drawing process, a hot drawing is preferably used. For example, in the melt casting, the following process may be exemplified: a process which comprises extruding a melt film from a die then cooling the film by a cooling means (such as a cooling roll) with drawing to a uniaxial direction, a process which comprises cooling a melt film extruded from a die, then drawing the film at a predetermined temperature (a temperature not lower than a glass transition temperature and lower than a melting temperature), and others. Moreover, in the solvent cast, orientation may be imparted to the film by stretching a preliminarily dried film containing a solvent. From the viewpoint of film productivity, the melt casting, particularly a melt-extrusion process, is preferred. Moreover, it is sufficient that the film is oriented to at least one direction (a longitudinal or machine direction (MD) or a transverse direction (TD)). The film may be oriented to two crossing or perpendicular directions. It is most preferred to stretch the film biaxially.

The degree of orientation (draw ratio) of the film is from 1.2 to 8, preferably from 1.2 to 4, more preferably from 1.2 to 3, particularly from 1.4 to 2, and usually from 1. 2 to 1. 8 in at least one direction. Moreover, a biaxially stretched film may have a draw ratio of from 1.1 to 8 (e.g., from 1.1 to 5, preferably from 1.1 to 2 and more preferably from 1.2 to 1.5) in the MD direction and a draw ratio of from 1.0 to 4 (e.g., from 1.0 to 3, preferably from 1.0 to 2 and more preferably from 1.1 to 1.5) in the TD direction.

The thickness of the film may be selected depending on the application, and may be for example, from 5 to 200 µm, preferably from 10 to 150 µm, more preferably from 20 to 100 µm (e.g., from 20 to 80 µm) and particularly from 20 to 40 µm.

### INDUSTRIAL APPLICABILITY

The glucan derivative of the present invention (e.g., a cellulose acylate derivative) can be preferably used as a thermoplastic resin and is inhibited in hygroscopicity at a high level. Therefore, the glucan derivative can improve dimensional stability in a molded article thereof. The glucan derivative is high in compatibility with a plasticizer or solubility in a solvent, and has a high moldability (e.g., injection moldability). Moreover, by adjusting a graft chain of the glucan derivative, the glucan derivative can impart a wide range of elastic modulus or elasticity to a molded article thereof. Therefore, the glucan derivative of the present invention (e.g., a cellulose acylate derivative) is preferably utilizable for various molded articles, for example, a fiber, and a variety of films (e.g., a wrapping film, and an optical film) or sheets.

The molded article comprising the glucan derivative of the present invention (or a molded product, e.g., an injection-molded product) can be preferably used for various applications, for example, in each of a part, a housing and others used in office automation (OA) and electrical household appliances, electric or electronic fields, communication equipment, sanitary fields, transportation vehicles such as an automobile, housing-related industries such as furnishing or furniture and building material, and miscellaneous goods.

The glucan derivative of the present invention (particularly, a cellulose acylate derivative such as a cellulose acetate derivative) or a film thereof is utilizable as a variety of optical films due to the excellent optical properties. Examples of the optical film may include a color filter, a base film of a photo film, and a film for LCDs. In particular, the film of the present invention is useful for a polarizer protective film (e.g., a protective film for at least one surface of a polarizing membrane, particularly for both surfaces thereof), and an optical compensation film for LCDs (e. g. , a retarder film).

### EXAMPLES

The following examples are intended to describe this invention in further detail and should by no means be interpreted as defining the scope of the invention.

### (Example 1)

To a separable flask, 100 grams of a cellulose acetate (trade name "Cellulose Acetate L40" manufactured by Daicel Chemical Industries, Ltd., the degree of substitution of acetyl group: 2.45) and 190 grams of ε-caprolactone were added, and the mixture was heated up to 140°C in solution. A solution containing butyltin trioctylate (0.14 gram) and ε-caprolactone (10 grams) were added to the separable flask, and the reaction (graft polymerization) was conducted at 180°C for 5 hours.

The grafted product (5.0 grams) obtained by the reaction was dissolved in 50 grams of dehydrated pyridine at a room temperature, and 0.66 gram of acetic anhydride was added thereto at a room temperature. The mixture was heated at 75°C and reacted for 2 hours. After the reaction, the mixture was cooled to a room temperature. The reaction product was precipitated by methanol and washed thoroughly, and then dried in vacuo to give a cellulose acetate derivative (purified product). The yield of the cellulose acetate derivative (purified product) was 4.9 grams.

An analysis of the obtained cellulose acetate derivative by NMR revealed as follows: the degree of substitution of the acetyl group bonding to the glucose unit was 2.82, the degree of substitution of the graft chain was 0.18, the average degree of acetyl substitution of the hydroxyl group in the graft chain was 0.18 (or the proportion of the hydroxyl group protected with acetyl group in the graft chain was 1.00 mol relative to 1 mol of the graft chain, that is, all hydroxyl groups in the graft chain were acetylated), the average molar substitution (mole number) of ε-caprolactone per 1 mol of the glucose was 3.30 mol, the degree of grafting was 131%, the number-average degree of polymerization of the graft chain was 18.25, and the molar concentration of the ester bond introduced per one glucose unit was 9.47 mmol/g.

### (Example 2)

To a separable flask, 50 grams of a cellulose acetate (trade name "Cellulose Acetate L40" manufactured by Daicel Chemical Industries, Ltd., the degree of substitution of acetyl group: 2.45), 66.4 grams of ε-caprolactone and 20 grams of xylene were added, and the mixture was heated up to 140°C in solution. A xylene solution containing tetraisopropyl titanate (0.1 gram) and xylene (4.4 grams) was added by a dropping funnel to the separable flask, and the reaction (graft polymerization) was conducted at 140°C for 5 hours. After the reaction, 34.4 grams of xylene were further added thereto at 125°C. Then, the mixture was cooled to 60°C. To the flask was added a xylene solution containing 1.35 grams of methanesulfonic acid and 6 grams of xylene over 10 minutes, the reaction was conducted at 65°C for 15 minutes, then the temperature was raised and the reaction was conducted at 85°C for 100 minutes. Further, to the flask were added 52 grams of isopropenyl acetate over 15 minutes, and the reaction was conducted at 85°C for 280 minutes with stirring. Thereafter, the flask was cooled, and 1.3 grams of pyridine were added thereto at 65 to 70°C for neutralization and mixed thoroughly. The reaction product was precipitated by 4 L of methanol, and a solvent component containing methanol was removed therefrom by decantation. To the residue was added 2 L of methanol, and the mixture was stayed overnight. A solvent component was removed therefrom by decantation. Incidentally, the methanol mixture containing the result product was yellow. Further, the result product was dipped in 1 L of methanol for 2 hours, and repeated three times. The resulting matter was filtrated and dried in vacuo to give a cellulose acetate derivative (purified product).

An analysis of the obtained cellulose acetate derivative by NMR revealed as follows: the degree of substitution of the acetyl group bonding to the glucose unit was 2.90, the degree of substitution of the graft chain was 0.10, the average degree of acetyl substitution of the hydroxyl group in the graft chain was 0.10 (or the proportion of the hydroxyl group protected with acetyl group in the graft chain was 1.00 mol relative to 1 mol of the graft chain, that is, all hydroxyl groups in the graft chain were acetylated), the molar substitution (mole number) of ε-caprolactone per 1 mol of the glucose was 0.23 mol, the degree of grafting was 9.0%, the number-average degree of polymerization of the graft chain was 2.35, and the molar concentration of the ester bond introduced per one glucose unit was 10.27 mmol/g.

### (Example 3)

To a separable flask, 100 grams of a cellulose acetate (trade name "Cellulose Acetate L-20" manufactured by Daicel Chemical Industries, Ltd., the degree of substitution of acetyl group: 2.45), 100 grams of ε-caprolactone and 134 grams of cyclohexanone were added, and the mixture was heated up to 140°C in solution. A solution containing butyltin trioctylate (0.25 gram) and cyclohexanone (10 grams) was added to the separable flask, and the reaction (graft polymerization) was conducted at 160°C for 2 hours.

The grafted product (5.0 grams) obtained by the reaction was dissolved in 50 grams of dehydrated pyridine at a room temperature, and 50 grams of propionic anhydride and 0.5 gram of dimethylaminopyridine were added thereto at a room temperature, and the mixture was subjected to a reaction at 100°C for 1 hour. After the reaction, the reaction mixture was cooled to a room temperature. The reaction product was precipitated by methanol and washed thoroughly, and then dried in vacuo to give a cellulose acetate derivative (purified product). The yield of the cellulose acetate derivative (purified product) was 5.1 grams.

An analysis of the cellulose acetate derivative by NMR revealed as follows: the degree of substitution of the acetyl group bonding to the glucose unit was 2.45, the degree of substitution of the propionyl group bonding to the glucose unit was 0.40, the degree of substitution of the graft chain was 0.15, the average degree of acetyl substitution of the hydroxyl group in the graft chain was 0.15 (or the proportion of the hydroxyl group protected with propionyl group in the graft chain was 1. 00 mol relative to 1 mol of the graft chain), and all hydroxyl ends of the graft chain were propionylated. The average molar substitution (mole number) of ε-caprolactone per 1 mol of the glucose was 1.94 mol, the degree of grafting was 80.0%, the number-average degree of polymerization of the graft chain was 12.9, and the molar concentration of the ester bond introduced per one glucose unit was 9.55 mmol/g.

## Claims

1. A glucan derivative which comprises
a glucan having an acyl group and
a graft chain,
in which the acyl group and the graft chain bond to a glucose unit of the glucan,
wherein the graft chain is formed from at least one component selected from the group consisting of a lactone and a hydroxycarboxylic acid,
the graft chain has a hydroxy group, and
at least part of the hydroxy group in the graft chain is protected with a protecting group.

2. A glucan derivative according to claim 1, wherein the glucan is a cellulose.

3. A glucan derivative according to claim 1, wherein the graft chain is formed from a C₄₋₁₆lactone, and the hydroxyl group in the graft chain is protected with an acyl group.

4. A glucan derivative according to claim 1, wherein the degree of substitution of the acyl group bonding to the glucose unit is from 1 to 2.99, and the degree of substitution of the graft chain is from 0.01 to 2.

5. A glucan derivative according to claim 1, wherein the acyl group bonding to the glucose unit comprises at least an acetyl group, the degree of substitution of the acyl group is from 1.5 to 2.95, the degree of substitution of the graft chain formed from a C₅₋₁₀lactone is from 0.05 to 0.8, and the hydroxyl group in the graft chain is protected with an acyl group.

6. A glucan derivative according to claim 1, wherein the proportion of the degree of substitution of the acyl group bonding to the glucose unit relative to the degree of substitution of the graft chain [the former/the latter] is from 0.3/0.7 to 0.992/0.008, and the total of the degree of substitution of the acyl group and the degree of substitution of the graft chain is from 2.5 to 3.

7. A process for producing a glucan derivative recited in claim 1, which comprises
a step for grafting to an acylated glucan at least one component selected from the group consisting of a lactone and a hydroxycarboxylic acid, wherein, in the acylated glucan, an acyl group bonds to a glucose unit, and
a step for protecting at least part of a hydroxyl group in the graft chain obtainable by the grafting step with a protecting agent corresponding to a protecting group.

8. A process according to claim 7, wherein the protecting agent comprises an acylating agent.

9. A process according to claim 7, wherein the protecting agent comprises isopropenyl acetate.

10. A process according to claim 7, wherein an acylated glucan having a residual hydroxyl group in the glucose unit is used as the acylated glucan, and
the protecting step comprises providing an acylating agent as the protecting agent, and acylating at least part of the hydroxyl group in the graft chain as well as the residual hydroxyl group in the glucose unit.

11. A molded article which is an injection-molded article of a glucan derivative recited in claim 1.

12. A film comprising a glucan derivative recited in claim 1, wherein the glucan derivative is a cellulose acylate derivative.

13. A film according to claim 12, which is an optical compensation film for liquid crystal displays, or a polarizer protective film.

## Patentansprüche

1. Glucanderivat, welches umfasst
ein Glucan, das eine Acylgruppe besitzt, und
eine Pfropfkette,
bei dem die Acylgruppe und die Pfropfkette an eine Glucoseeinheit des Glucans gebunden sind,
wobei die Pfropfkette aus mindestens einer Komponente, die ausgewählt ist aus der Gruppe bestehend aus einem Lacton und einer Hydroxycarbonsäure, gebildet ist,
wobei die Pfropfkette eine Hydroxygruppe besitzt, und
wobei mindestens ein Teil der Hydroxygruppe in der Pfropfkette mit einer Schutzgruppe geschützt ist.

2. Das Glucanderivat gemäß Anspruch 1, wobei das Glucan eine Cellulose ist.

3. Das Glucanderivat gemäß Anspruch 1, wobei die Pfropfkette aus einem C₄-C₁₆ Lacton gebildet ist, und die Hydroxylgruppe in der Pfropfkette mit einer Acylgruppe geschützt ist.

4. Glucanderivat gemäß Anspruch 1, wobei der Substitutionsgrad der Acylgruppe, die an die Celluloseeinheit gebunden ist, 1 bis 2,99 beträgt, und der Substitutionsgrad der Pfropfkette 0,01 bis 2 beträgt.

5. Das Glucanderivat gemäß Anspruch 1, wobei die Acylgruppe, die an die Glucoseeinheit gebunden ist, mindestens eine Acetylgruppe umfasst, wobei der Substitutionsgrad der Acylgruppe 1,5 bis 2,95 beträgt, wobei der Substitutionsgrad an der Pfropfkette, die aus einem C₅₋₁₀ Lacton gebildet ist, 0,05 bis 0,8 beträgt, und wobei die Hydroxylgruppe in der Pfropfkette mit einer Acylgruppe geschützt ist.

6. Das Glucanderivat gemäß Anspruch 1, wobei das Verhältnis des Substitutionsgrads der Acylgruppe, die an die Glucoseeinheit gebunden ist, relativ zum Substitutionsgrad der Pfropfkette [der Vorstehende / der Nachstehende] 0,3/0,7 bis 0,992/0,008 beträgt, und die Summe des Substitutionsgrads der Acylgruppe und des Substitutionsgrads der Pfropfkette 2,5 bis 3 beträgt.

7. Verfahren zum Herstellen eines Glucanderivats wie in Anspruch 1 vorgetragen, welches umfasst
einen Schritt zum Pfropfen an ein acyliertes Glucan mindestens eine Komponente, die ausgewählt ist aus der Gruppe bestehend aus einem Lacton und einer Hydroxycarbonsäure, wobei, im acylierten Glucan, eine Acylgruppe an eine Glucoseeinheit gebunden ist, und
einen Schritt zum Schützen zumindest eines Teils einer Hydroxylgruppe in der Pfropfkette, die durch den Pfropfschritt erhältlich ist, mit einem zu der Schutzgruppe korrespondierenden Schutzmittel.

8. Das Verfahren gemäß Anspruch 7, wobei das Schutzmittel ein Acylierungsmittel umfasst.

9. Das Verfahren gemäß Anspruch 7. wobei das Schutzmittel Isopropenylacetat umfasst.

10. Das Verfahren gemäß Anspruch 7, wobei ein acyliertes Glucan, das eine restliche Hydroxylgruppe in der Glucoseeinheit besitzt, als das acylierte Glucan verwendet wird, und
wobei der Schutzschritt das Bereitstellen eines Acylierungsmittels als das Schutzmittel, und das Acylieren mindestens eines Teils der Hydroxylgruppe in der Pfropfkette sowie der restlichen Hydroxylgruppe in der Glucoseeinheit, umfasst.

11. Geformter Gegenstand, der ein spritzgegossener Gegenstand eines Glucanderivats, wie in Anspruch 1 vorgetragen, ist.

12. Folie, umfassend ein Glucanderivat, wie in Anspruch 1 vorgetragen, wobei das Glucanderivat ein Celluloseacylatderivat ist.

13. Die Folie gemäß Anspruch 12, die eine optische Ausgleichsfolie für Flüssigkristallanzeigen, oder eine Polarisatorschutzfolie ist.

## Revendications

1. Dérivé de glucane comprenant
un glucane ayant un groupe acyle et
une chaîne greffée,
où le groupe acyle et la chaîne greffée sont liés à un motif glucose du glucane,
dans lequel la chaîne greffée est formée à partir d'au moins un composant choisi dans l'ensemble constitué par une lactone et un acide hydroxycarboxylique,
la chaîne greffée ayant un groupe hydroxy, et au moins une partie du groupe hydroxy dans la chaîne greffée étant protégée par un groupe protecteur.

2. Dérivé de glucane selon la revendication 1, dans lequel le glucane est une cellulose.

3. Dérivé de glucane selon la revendication 1, dans lequel la chaîne greffée est formée à partir d'une lactone en C₄ à C₁₆, et le groupe hydroxyle dans la chaîne greffée est protégée par un groupe acyle.

4. Dérivé de glucane selon la revendication 1, dans lequel le degré de substitution du groupe acyle lié au motif glucose est de 1 à 2,99, et le degré de substitution de la chaîne greffée est de 0,01 à 2.

5. Dérivé de glucane selon la revendication 1, dans lequel le groupe acyle lié au motif glucose comprend au moins un groupe acétyle, le degré de substitution du groupe acyle est de 1,5 à 2,95, le degré de substitution de la chaîne greffée formée à partir d'une lactone en C₅ à C₁₀ est de 0,05 à 0,8, et le groupe hydroxyle dans la chaîne greffée est protégé par un groupe acyle.

6. Dérivé de glucane selon la revendication 1, dans lequel la proportion du degré de substitution du groupe acyle lié au motif glucose par rapport au degré de substitution de la chaîne greffée [le premier/le dernier] est de 0,3/0,7 à 0,992/0,008, et le total du degré de substitution du groupe acyle et du degré de substitution de la chaîne greffée est de 2,5 à 3.

7. Procédé pour produire un dérivé de glucane défini dans la revendication 1, qui comprend
une étape de greffage à un glucane acylé d'au moins un composant choisi dans l'ensemble constitué par une lactone et un acide hydroxycarboxylique, un groupe acyle étant lié à un motif glucose dans le glucane acylé, et
une étape de protection d'au moins une partie d'un groupe hydroxyle dans la chaîne greffée pouvant être obtenue par l'étape de greffage avec un agent protecteur correspondant à un groupe protecteur.

8. Procédé selon la revendication 7, dans lequel l'agent protecteur comprend un agent d'acylation.

9. Procédé selon la revendication 7, dans lequel l'agent protecteur comprend de l'acétate d'isopropényle.

10. Procédé selon la revendication 7, dans lequel un glucane acylé ayant un groupe hydroxyle résiduel dans le motif glucose est utilisé en tant que glucane acylé, et l'étape de protection comprend la mise en oeuvre d'un agent d'acylation en tant qu'agent protecteur, et l'acylation d'au moins une partie du groupe hydroxyle dans la chaîne greffée ainsi que du groupe hydroxyle résiduel dans le motif glucose.

11. Objet moulé qui est un objet moulé par injection d'un dérivé de glucane défini dans la revendication 1.

12. Film comprenant un dérivé de glucane défini dans la revendication 1, dans lequel le dérivé de glucane est un dérivé d'acylate de cellulose.

13. Film selon la revendication 12, qui est un film de compensation optique pour dispositifs d'affichage à cristaux liquides, ou un film protecteur de polariseur.
